(19) Europäisches Patentamt
European Patent Office
Office européen des brevets

(11) Numéro de publication : **0 116 248**
**B1**

# (12) FASCICULE DE BREVET EUROPÉEN

(45) Date de publication du fascicule du brevet : **05.03.86**

(51) Int. Cl.⁴ : **C 08 F 10/02**, C 08 F 4/62, C 08 F 2/38

(21) Numéro de dépôt : **83402478.8**

(22) Date de dépôt : **20.12.83**

## (54) Procédé continu amélioré de fabrication d'homopolymères ou de copolymères de l'éthylène.

(30) Priorité : **24.12.82 FR 8221736**

(43) Date de publication de la demande : **22.08.84 Bulletin 84/34**

(45) Mention de la délivrance du brevet : **05.03.86 Bulletin 86/10**

(84) Etats contractants désignés : **AT BE CH DE FR GB IT LI LU NL SE**

(56) Documents cités :
**FR-A- 1 358 111**
**FR-A- 2 075 128**
**FR-A- 2 253 764**
**FR-A- 2 302 305**
**FR-A- 2 385 745**
**GB-A- 884 116**

(73) Titulaire : **Société Chimique des Charbonnages S.A.**
**Tour Aurore Place des Reflets**
**F-92080 Paris La Défense Cedex 5 (FR)**

(72) Inventeur : **Machon, Jean-Pierre**
**83, rue Delisse-Engrand**
**F-62400 Béthune (FR)**
Inventeur : **Bujadoux, Karel**
**31 Avenue Van Pelt**
**F-62300 Lens (FR)**
Inventeur : **Risbourg, Victor**
**Val des Francs La Frenaye**
**F-76170 Lillebonne (FR)**

(74) Mandataire : **Dubost, Thierry**
**SOCIETE CHIMIQUE DES CHARBONNAGES Service Propriété Industrielle B.P. 57**
**F-62670 Mazingarbe (FR)**

**EP 0 116 248 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un procédé continu amélioré de fabrication d'homopolymères ou de copolymères de l'éthylène.

Il est connu par le brevet français n° 2 202 899 d'homopolymériser l'éthylène et de copolymériser l'éthylène avec au moins une α-oléfine, en continu, en présence d'un système catalytique de type Ziegler à température élevée et sous pression élevée.

L'installation utilisée comprend au moins un réacteur comprenant au moins une zone réactionnelle, au moins un séparateur, des circuits de recyclage de l'éthylène et, le cas échéant, des α-oléfines (ci-après les monomères) n'ayant pas réagi vers un compresseur secondaire recevant d'autre part les monomères frais d'un compresseur primaire, et qui alimente le réacteur sous la pression de (co)polymérisation choisie.

Dans ce type de procédé des traces des composants du système catalytique peuvent être entraînées avec les gaz. Cet entraînement peut provoquer, d'une part, une poursuite de la (co)polymérisation avant et pendant la séparation du (co)polymère formé d'avec les monomères n'ayant pas réagi et une diminution de la masse moléculaire moyenne du (co)polymère formé que l'on recueille dans le séparateur. La poursuite de la (co)polymérisation dans la conduite reliant le réacteur au séparateur et dans le séparateur est très gênante car elle oblige à modifier le réglage des paramètres de fonctionnement du réacteur de manière aléatoire. Il en est de même pour le séparateur dans lequel la (co)polymérisation peut se poursuivre provoquant l'apparition d'un gradient thermique entre ses parties haute et basse. Il est évidemment très difficile, dans ces conditions, d'obtenir un (co)polymère ayant les caractéristiques souhaitées. L'entraînement des traces des composants du système catalytique peut provoquer, d'autre part, une (co)polymérisation des monomères recyclés dans les circuits de recyclage suivant le séparateur. Il se forme ainsi des (co)polymères généralement de très basse masse moléculaire (inférieur à 2000) ayant, dans les conditions ordinaires de température et de pression, l'aspect d'huiles, de graisses ou de cires. Des pièges sont généralement prévus sur les circuits de recyclage de façon à y recueillir ces (co)polymères de très basse masse moléculaire. Cependant ces (co)polymères peuvent aussi se déposer sur la paroi intérieure des conduites de recyclage et leur masse moléculaire peut augmenter par suite du passage continu des gaz de recyclage contenant des traces des composants du système catalytique. Alors que les polymères de très basse masse moléculaire sont peu gênants car faciles à éliminer, les (co)polymères de plus haute masse moléculaire (supérieure à 2000) sont très gênants et peuvent entraîner une perte de charge dans l'installation et même conduire au bouchage des conduites de recyclage.

On a déjà décrit dans le brevet français n° 2 302 305 un procédé de (co)polymérisation selon lequel on injecte, en fin de réaction, au moins un produit choisi parmi les sels métalliques alcalins ou alcalino-terreux des acides carboxyliques, la quantité injectée étant suffisante pour provoquer la désactivation du catalyseur, de préférence des deux constituants du catalyseur (dérivé de métal de transition et activateur). L'injection du sel métallique a lieu de préférence le plus près possible de la vanne de sortie du réacteur. Ce procédé antérieur n'est, malgré tout, pas entièrement satisfaisant car le gradient thermique apparaissant dans le séparateur, bien que légèrement diminué, est encore trop élevé. D'autre part le taux de butène-2 formé par isomérisation du butène-1 est trop important. Le butène-2 est particulièrement gênant car, ne copolymérisant pas avec l'éthylène et les α-oléfines, il s'accumule dans les gaz recyclés.

On connaît également par le brevet français n° 2 075 128 un procédé pour interrompre sélectivement la réaction de polymérisation des oléfines sous basse pression et à basse température qui consiste à ajouter, dans le réacteur, un composé organique contenant de l'oxygène et/ou de l'hydrogène actif ou un hydracide halogéné ou l'eau en une quantité inférieure à la quantité stœchiométrique représentée par la somme des groupes alkyle et hydrure liés à l'aluminium dans l'activateur du système catalytique. Ce procédé n'est pas satisfaisant quand il est appliqué à la polymérisation sous haute pression et à haute température ; en effet la destruction sélective de l'activateur laisse inaltéré le composé de métal de transition qui conserve son activité dans ces conditions sévères de polymérisation.

On connaît également par le brevet français n° 2 253 764 un procédé qui consiste, lors de la polymérisation de l'éthylène sous basse pression et à basse température, à introduire, après le catalyseur, un alcool en quantité de 2 à 10 moles pour 1 Kg de catalyseur. Ce procédé permet de régler le poids moléculaire du polyéthylène obtenu et ne provoque pas la désactivation du catalyseur.

La présente invention a pour but de remédier à ces inconvénients en proposant un procédé qui provoque l'interruption de la croissance des polymères formés en fin de réaction et dans les circuits de recyclage des gaz. En particulier ce procédé permet une meilleure maîtrise du séparateur dans lequel le gradient de température est considérablement diminué, voire annulé. Il permet d'éviter la formation de polymères de haute masse moléculaire dans les circuits de recyclage, et par conséquent une augmentation de la perte de charge dans lesdits circuits. Il permet également une réduction importante de l'isomérisation du butène-1 en butène-2.

La présente invention a pour objet un procédé continu de fabrication d'homopolymères de l'éthylène ou de copolymères de l'éthylène avec au moins une α-oléfine comportant de 3 à 8 atomes de carbone, comprenant successivement :

a) une première étape de (co)polymérisation de l'éthylène à une température comprise entre 180 et

320 °C, sous une pression comprise entre 300 et 2 500 bars, en présence d'un système catalytique comprenant d'une part au moins un composé halogéné de métal de transition des groupes IVa à VIa de la Classification Périodique et d'autre part au moins un activateur choisi parmi les hydrures et les composés organo-métalliques des métaux des groupes I à III de la Classification Périodique, le rapport molaire de l'activateur au composé de métal de transition étant compris entre 1 et 10,

b) une seconde étape de séparation du (co)polymère formé d'avec le(s) monomère(s) n'ayant pas réagi, sous une pression comprise entre 100 et 500 bars,

c) une troisième étape de recyclage de(s) monomère(s) n'ayant pas réagi, et

d'une quatrième étape de recompression jusqu'à la pression de (co)polymérisation, caractérisé en ce qu'on introduit dans le milieu réactionnel, en fin de première étape, au moins un composé choisi parmi les monocétones comportant de 3 à 10 atomes de carbone, les dicétones comportant de 4 à 11 atomes de carbone, les monoalcools comportant de 1 à 14 atomes de carbone, les polyalcools comportant de 2 à 10 atomes de carbone et l'eau.

L'α-oléfine comportant de 3 à 8 atomes de carbone est choisie parmi le propylène, le butène-1, le pentène-1, l'hexène-1, les méthyl-pentènes-1, l'heptène-1, l'octène-1 et leurs mélanges.

On utilise avantageusement le propylène, le butène-1, l'hexène-1, les mélanges de propylène et de butène-1, de butène-1 et d'hexène-1.

La première étape de (co)polymérisation de l'éthylène est mise en œuvre dans au moins un réacteur comportant au moins une zone réactionnelle. On peut utiliser un ou des réacteurs autoclaves et/ou tubulaires. Afin de contrôler avec précision l'indice de fluidité du (co)polymère formé, il peut être avantageux d'effectuer la (co)polymérisation en présence de jusqu'à 2 % en moles d'un agent de transfert de chaînes, tel que l'hydrogène.

Le système catalytique utilisé comprend d'une part au moins un composé halogéné de métal de transition des groupes IVa à VIa de la Classification Périodique qui peut être :

— du chlorure de titane violet $TiCl_3$, 1/3 $AlCl_3$,

— un composé de formule $(TiCl_a)$ $(MgCl_2)_y$ $(AlCl_3)_z$ $(RMgCl)_b$ dans laquelle $2 \leq a \leq 3$, $y \geq 2$, $0 \leq z \leq 1/3$ et $0 \leq b \leq 1$, seul ou en mélange avec un composé de formule $TiCl_3$ $(AlCl_3)_W$ $(E,TiCl_4)_x$ dans laquelle $0 \leq w \leq 1/3$, $0 \leq x \leq 0{,}03$ et E est un éther diisoamylique ou di n-butylique,

— le produit obtenu par mise en contact d'un composé complexe de magnésium comportant au moins un composé choisi parmi les monohalogénures de magnésium et les hydrures d'halogénomagnésium, et d'un halogénure de titane ou de vanadium dans lequel le métal a une valence non supérieure à 3,

— un composé de formule $(MX_a)$ $(MgX_2)_b$ $(RMgX)_c$ $(HMgX)_d$, dans laquelle M est un métal du groupe IVa ou Va de la Classification Périodique, X est un halogène, R est un radical hydrocarboné et $2 \leq a \leq 3{,}5$, $1 \leq b \leq 30$, $1 < c \leq 8$ et $0 \leq d \leq 10$,

— un composé de formule ($TiCl_3$, 1/3 $AlCl_3$) $(MCl_3)_x$ $(MgX_2)_y$ dans laquelle M est un métal de transition des groupes Va et VIa de la Classification Périodique, X est un halogène, $0{,}3 \leq x \leq 3$ et $0 \leq y \leq 20$,

— un composé formé de cristaux mixtes contenant $TiCl_3$ (ou $TiCl_2$), $AlCl_3$ et d'autres chlorures métalliques tels que $FeCl_2$, $NiCl_2$, $MoCl_3$, $MgCl_2$,

— un composé de formule $(MX_3)$ $(\varnothing_n\ SiL_{4-n})_b$ dans laquelle M est un métal de transition des groupes IVa à VIa de la Classification Périodique, ∅ est un noyau aromatique ou polyaromatique éventuellement substitué ayant de 6 à 15 atomes de carbone, L est soit un atome d'halogène, soit un groupe hydroxyle et $1 \leq n \leq 3$, $0{,}2 \leq b \leq 2$, ledit composé étant le cas échéant associé à $AlCl_3$, $MgCl_2$ et/ou un halogénure de métal du groupe VIII,

— un composé de formule $Y_{m-n}M(OR)_n$ dans laquelle M représente un ou plusieurs métaux des groupes Ia, IIa, IIb, IIIb et VIIa de la Classification Périodique, Y est un radical inorganique monovalent, R est un radical hydrocarboné monovalent, m est la valence de M et $1 \leq n \leq m$, mis en présence d'un dérivé halogéné d'un métal de transition des groupes IVa à VIa.

Le système catalytique comprend d'autre part au moins un activateur choisi parmi les hydrures et les composés organo-métalliques des métaux des groupes I à III de la Classification Périodique, et qui peut être :

— un alkylaluminium, comme le triéthylaluminium, le tributylaluminium, le triisobutylaluminium, le trioctylaluminium,

— un chlorodialkylaluminium comme le chlorodiéthylaluminium,

— un dichloroalkylaluminium comme le dichloroéthylaluminium,

— un alkylsiloxalane de formule

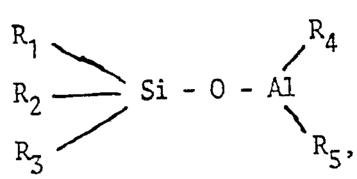

$R_1$, $R_2$, $R_3$, $R_4$ étant des radicaux hydrocarbonés ayant de 1 à 10 atomes de carbone et $R_5$ étant soit un radical hydrocarboné ayant de 1 à 10 atomes de carbone, soit un radical du type

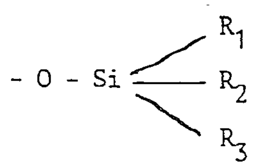

— un composé à base de fluorure d'alkylaluminium et ayant pour formules $(AlR_2F)$ $(AlR_2X)_a$ ou bien $(AlR_2F)$ $(AlR_2H)_b$ $(AlR_3)_c$, dans lesquelles R est un groupe alkyle ayant de 1 à 12 atomes de carbone, X un halogène autre que le fluor, $0{,}1 \leq a \leq 0{,}4$, $0{,}1 \leq b \leq 0{,}4$ et $0{,}05 \leq c \leq 0{,}2$.

Le système catalytique peut être déposé sur un support inerte comprenant, par exemple, un ou plusieurs des composés suivants : $MgCl_2$, $Al_2O_3$, $MoO_3$, $MnCl_2$, $SiO_2$, MgO.

Par fin de première étape on doit entendre un moment où la (co)polymérisation est totalement ou presque complètement achevée. Ainsi le composé choisi peut être introduit dans une des dernières zones réactionnelles (de préférence la dernière zone) du réacteur ou de l'ensemble de réacteurs, ou bien encore entre la sortie de ladite dernière zone réactionnelle et la vanne de détente, ou encore entre ladite vanne de détente et l'entrée du séparateur.

L'introduction peut avoir lieu éventuellement en plusieurs de ces endroits et peut se faire par tout moyen approprié, tel qu'une pompe à haute pression, le composé choisi étant injecté à l'état pur ou en solution ou émulsion dans un solvant inerte tel un hydrocarbure saturé.

Le flux molaire du composé introduit est avantageusement compris entre 0,5 et 6 fois le flux molaire du métal ou des métaux de transition du système catalytique, et de préférence compris entre 1 et 4 fois.

La monocétone est choisie parmi les produits de formule générale

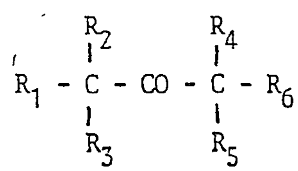

les radicaux $R_1$, $R_2$, $R_3$, $R_4$, $R_5$, $R_6$ étant l'hydrogène ou des groupes alkyles ayant de 1 à 7 atomes de carbone, les radicaux $R_1$ et $R_6$ pouvant former un seul radical alkylène, et la somme du nombre total d'atomes de carbone contenu dans la monocétone étant compris entre 3 et 10. On peut utiliser, par exemple : la méthyléthylcétone, la méthyl-n-propylcétone, la diéthylcétone, la méthylisobutylcétone, la diisobutylcétone, la cyclohexanone, et avantageusement l'acétone.

La dicétone est choisie parmi les α-, β- et γ-dicétones de formule générale

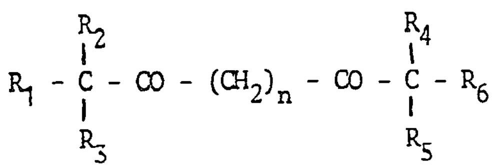

n étant égal à 0, 1 ou 2,

$R_1$, $R_2$, $R_3$, $R_4$, $R_5$ et $R_6$ étant l'hydrogène ou des groupes alkyles ayant de 1 à 7 atomes de carbone, les radicaux $R_1$ et $R_6$ pouvant former un seul radical alkylène, et le nombre total d'atomes de carbone contenu dans la dicétone étant compris entre 4 et 11. On peut utiliser, par exemple, la 2,3-butanedione, l'acétylacétone, l'acétonylacétone, la 2,3-hexanedione, la 3,4-hexanedione, la cyclohexanedione-1,3. Le monoalcool est choisi parmi les alcools primaires, secondaires ou tertiaires saturés comportant de 1 à 14 atomes de carbone, tel que le méthanol, l'éthanol ou l'iso-propanol. Le polyalcool est choisi parmi les diols ou triols comportant de 2 à 10 atomes de carbone, tel que l'éthylèneglycol. Il n'est pas nécessaire de déshydrater les composés organiques utilisés.

L'introduction d'au moins un composé tel que défini ci-dessus dans le milieu réactionnel, en fin de première étape, procure le grand avantage d'interrompre rapidement la réaction de (co)polymérisation et d'éviter la diminution de la masse moléculaire moyenne des (co)polymères formés. On constate en particulier l'absence de gradient de température dans le séparateur ou sa très forte diminution.

De façon à améliorer encore le résultat obtenu, et particulièrement à éviter totalement la formation de polymères dans les conduites de recyclage suivant le séparateur, le procédé selon l'invention est secondairement caractérisé en ce qu'on introduit, en outre, lors de la 2e et/ou de la 3e étape, dans le courant de monomère(s) recyclé(s) et le cas échéant de (co)polymères formés, au moins un composé choisi parmi :

— les amides des acides organiques saturés ou insaturés comprenant de 12 à 22 atomes de carbone,
— les polyalkylènepolyols comprenant de 4 à 500 atomes de carbone,
— les composés comportant au moins 2 fonctions époxyde.

Par introduction lors de la 2e étape il faut comprendre que le composé choisi est introduit soit juste avant soit pendant l'étape de séparation, dans tous les cas dans le milieu réactionnel se trouvant à la pression de séparation.

Par introduction lors de la 3e étape, on entend que le composé choisi est introduit après l'étape de séparation et avant l'étape de recompression des gaz, avantageusement avant le passage des gaz dans les pièges froids.

Les amides des acides organiques saturés utilisables selon l'invention sont par exemple le lauramide, le myristamide, le palmitamide, le stéaramide, l'arachidamide. Les amides des acides organiques insaturés utilisables selon l'invention sont par exemple l'oléamide, l'élaïdamide, l'érucamide, le brassidamide. Les polyalkylènepolyols utilisables selon l'invention sont par exemple les polyéthylèneglycols de masse moléculaire comprise entre 200 et 10 000, les polypropylèneglycols de masse moléculaire comprise entre 250 et 4 000, les cotélomères poly(éthylène-propylène)-glycols, et leurs mélanges. Les composés comportant au moins deux fonctions époxyde utilisables selon l'invention sont notamment l'huile de soja époxydée, les dérivés époxydiques d'esters d'acides organiques polyinsaturés, les dérivés époxydiques de composés à plusieurs noyaux aromatiques, tel le diglycidyléther du bisphénol A.

La quantité de composé introduit lors de la 2e et/ou de la 3e étape est avantageusement comprise entre 0,001 et 0,1 mole par tonne de monomère(s) recyclé(s).

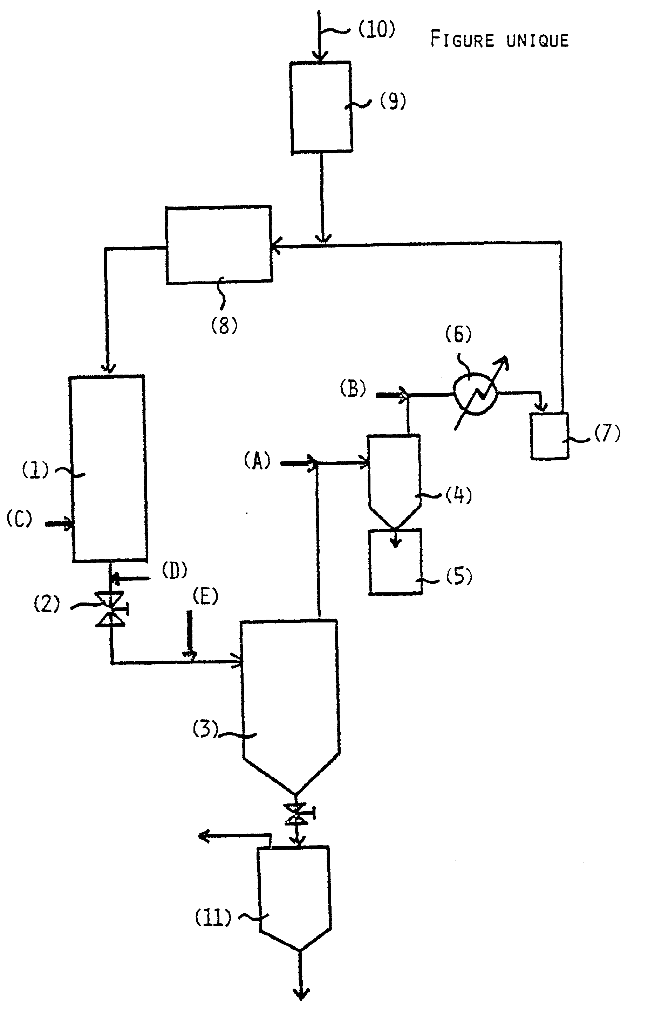

On décrira maintenant en détail une installation de (co)polymérisation pour la mise en œuvre du procédé selon l'invention, schématisée sur la figure unique en annexe. On a représenté en (1) le réacteur de polymérisation, (2) la vanne de détente du réacteur, (3) le séparateur sous moyenne pression, (11) une trémie de séparation sous basse pression, (4) un cyclone standard monté sur un décanteur (5), (6) un réfrigérant, (7) un second décanteur, (8) le compresseur secondaire, (9) le compresseur primaire et (10) la conduite d'arrivée de(s) monomère(s) frais.

Les points d'injection du ou des composés introduits dans le milieu réactionnel en fin de première étape sont repérés (C), (D) et (E).

Le point d'injection du ou des composés éventuellement introduits au cours de la 2e étape est repéré (E).

Les points d'injection du ou des composés éventuellement introduits au cours de la 3e étape sont repérés (A) et (B).

Les exemples non limitatifs suivants ont pour but d'illustrer l'invention.

### Exemple 1 (comparatif)

L'installation utilisée est schématisée sur la figure en annexe (décrite précédemment). Elle comprend un réacteur (1) autoclave à 3 zones dont les températures de fonctionnement sont respectivement de 210, 260 et 280 °C. On copolymérise dans ce réacteur, sous une pression de 800 bars, un mélange de 60 % en poids d'éthylène et 40 % en poids de butène-1, en présence du système catalytique ($TiCl_3$, 1/3 $AlCl_3$, $VCl_3$)/3$(C_2H_5)_3Al$ introduit dans les deux premières zones réactionnelles, et en présence de 0,1 % en moles d'hydrogène de manière à obtenir un copolymère d'indice de fluidité (mesuré selon la norme ASTM D 1238-73) compris entre 1 et 1,5 dg/min. Le temps de séjour moyen du système catalytique dans le réacteur est de 40 secondes. Le séparateur fonctionne normalement sous une pression de 250 bars.

On a rassemblé dans le tableau I en annexe, les résultats obtenus :

$\Delta T$ est le gradient de température entre le haut et le bas du séparateur (3), exprimé en °C,

TB2 est le taux de butène-2, en % en poids, contenu dans les gaz de recyclage, la prise d'essai de gaz étant effectuée à la sortie du décanteur (7).

On observe une difficulté à purger le décanteur (7) et, très rapidement, une très forte augmentation de la perte de charge entre la sortie du séparateur (3) et l'aspiration du compresseur secondaire (8).

### Exemples 2 à 6

L'installation et les conditions de (co)polymérisation sont les mêmes qu'à l'exemple 1.

On introduit au point d'injection mentionné au tableau 1 le composé également indiqué au tableau dans la quantité précisée, exprimée en mole par atomegramme de titane + vanadium contenu dans le système catalytique utilisé. Dans les cas où le composé choisi est introduit au point (C), on observe une diminution de 10 à 15 °C de la température de la 3e zone réactionnelle, par rapport à l'exemple 1.

Le décanteur (7) est moins difficile à purger qu'à l'exemple 1 et on ne constate pas d'augmentation très importante de la perte de charge, même après 200 heures de fonctionnement continu.

### Exemple 7 (comparatif)

L'installation et les conditions de la (co)polymérisation sont les mêmes qu'à l'exemple 1.

Suivant l'enseignement du brevet français n° 2 302 305, on injecte au point (C) du stéarate de calcium, en quantité indiquée au tableau 1 en mole/atomegramme de titane + vanadium où figurent également les résultats obtenus. On observe une diminution de 10 °C de la température de la 3e zone réactionnelle, par rapport à l'exemple 1.

Exemples 8 à 15

L'installation et les conditions de (co)polymérisation sont les mêmes qu'à l'exemple 1.

On introduit au point d'injection (D) 1 mole d'acétone par atomegramme de titane + vanadium contenu dans le système catalytique. Les quantités de composé introduit au cours de la 2e étape (point d'injection E) et au cours de la 3e étape sont exprimées en moles par tonne de monomères recyclés.

En ce qui concerne la 3e étape, le composé indiqué est injecté en chacun des points (A) et (B), selon la quantité indiquée. La quantité totale introduite dans l'ensemble des points (A) et (B) est donc égale au double de la valeur mentionnée au tableau II.

En plus des données ci-dessus on a également mentionné au tableau II : TB2 (déjà défini), l'indice de fluidité IF (mesuré selon la norme ASTM D 1238-73 et exprimé en dg/min) des graisses piégées, respectivement, dans le cyclone (4) et dans le décanteur (7), et la perte de charge PC (exprimée en bars) entre la sortie du séparateur (3) et l'aspiration du compresseur secondaire (8) après 0,50, 100 et 200 heures de fonctionnement continu. Le gradient de température ΔT observé entre le haut et le bas du séparateur (3) est nul pour tous ces exemples 8 à 15.

A titre comparatif on a reporté dans le tableau II les valeurs obtenues lors de l'essai comparatif (exemple 1).

Tableau I

| Exemple | Composé | Point d' injection | quantité | ΔT | TB2 (Taux de butène-2) |
|---|---|---|---|---|---|
| 1 | — | — | — | 25 | 6 |
| 2 | acétone | C | 1 | 0 | 1 |
| 3 | acétone | D | 1 | 5 | 2 |
| 4 | méthanol | C | 1 | 0 | 3 |
| 5 | eau | C | 4 | 0 | 2 |
| 6 | eau | C | 1 | 4 | 2 |
| 7 | stéarate de calcium | C | 1 | 18 | 5 |

(Voir tableau II page 7)

Tableau II

| Exemple | Composé introduit au cours de la 2e étape nature | 2e étape quantité | 3e étape nature | 3e étape quantité | TB2 (Taux de butène-2) | I.F. graisses (Indice de fluidité) (1) | I.F. graisses (Indice de fluidité) (7) | P.C. (Perte de charge) 0 h | P.C. 50 h | P.C. 100 h | P.C. 200 h |
|---|---|---|---|---|---|---|---|---|---|---|---|
| 8 | — | — | oléamide | 0,027 | 2 | 25 | 8 | 35 | 40 | 45 | 60 |
| 9 | — | — | stéaramide | 0,027 | 1,5 | 90 | 40 | 30 | 35 | 40 | 45 |
| 10 | stéaramide | 0,027 | stéaramide | 0,027 | 0,5 | 95 | 40 | 30 | 35 | 40 | 45 |
| 11 | stéaramide | 0,015 | stéaramide | 0,015 | 0,5 | 60 | 25 | 35 | 35 | 40 | 45 |
| 12 | oléamide | 0,015 | oléamide | 0,015 | 0,5 | 80 | 20 | 40 | 40 | 45 | 50 |
| 13 | PEG 400* | 0,025 | PEG 400 | 0,025 | 2,5 | 20 | 8 | 35 | 40 | 50 | 60 |
| 14 | PEG 6000 | 0,025 | PEG 6000 | 0,025 | 2,5 | 25 | 8 | 40 | 40 | 45 | 55 |
| 15 | HSE ** | 0,015 | HSE | 0,015 | 2,3 | 15 | 6 | 35 | 40 | 50 | 80 |
| 1 | — | — | — | — | 6 | 5 | 2 | 35 | 100 | 150 | 200 |

* PEG = polyéthylèneglycol
** HSE = huile de soja époxydée

**Revendications**

1. Procédé continu de fabrication d'homopolymères de l'éthylène ou de copolymères de l'éthylène avec au moins une α-oléfine comportant de 3 à 8 atomes de carbone, comprenant successivement :

a) une première étape de (co)polymérisation de l'éthylène à une température comprise entre 180 et 320 °C, sous une pression comprise entre 300 et 2 500 bars, en présence d'un système catalytique comprenant d'une part au moins un composé halogéné de métal de transition des groupes IVa à VIa de la Classification Périodique et d'autre part au moins un activateur choisi parmi les hydrures et les composés organo-métalliques des métaux des groupes I à III de la Classification Périodique, le rapport molaire de l'activateur au composé de métal de transition étant compris entre 1 et 10,

b) une seconde étape de séparation du (co)polymère formé d'avec le(s) monomère(s) n'ayant pas réagi, sous une pression comprise entre 100 et 500 bars,

c) une troisième étape de recyclage de(s) monomère(s) n'ayant pas réagi, et

d) une quatrième étape de recompression jusqu'à la pression de (co)polymérisation,

caractérisé en ce qu'on introduit dans le milieu réactionnel, en fin de première étape, au moins un composé choisi parmi les monocétones comportant de 3 à 10 atomes de carbone, les dicétones comportant de 4 à 11 atomes de carbone, les monoalcools comportant de 1 à 14 atomes de carbone, les polyalcools comportant de 2 à 10 atomes de carbone et l'eau.

2. Procédé selon la revendication 1, caractérisé en ce que le flux molaire dudit composé est compris entre 0,5 et 6 fois le flux molaire du métal ou des métaux de transition du système catalytique.

3. Procédé selon l'une des revendications 1 et 2, caractérisé en ce que le flux molaire dudit composé est compris entre 1 et 4 fois le flux molaire du métal ou des métaux de transition du système catalytique.

4. Procédé selon l'une des revendications 1 à 3, caractérisé en ce que la monocétone est l'acétone.

5. Procédé selon l'une des revendications 1 à 3, caractérisé en ce que le monoalcool est choisi parmi le méthanol, l'éthanol et l'isopropanol.

6. Procédé selon l'une des revendications 1 à 3, caractérisé en ce que le polyalcool est l'éthylène glycol.

7. Procédé selon l'une des revendications 1 à 6, caractérisé en ce qu'on introduit en outre, lors de la 2[e] et/ou de la 3[e] étape, dans le courant de monomère(s) recyclé(s), et le cas échéant de (co)polymères formés, au moins un composé choisi parmi :

— les amides des acides organiques saturés ou insaturés comprenant de 12 à 22 atomes de carbone,
— les polyalkylènepolyols comprenant de 4 à 500 atomes de carbone,
— les composés comportant au moins 2 fonctions époxyde.

8. Procédé selon la revendication 7, caractérisé en ce que la quantité dudit composé est comprise entre 0,001 et 0,1 mole par tonne de monomère(s) recyclé(s).

9. Procédé selon la revendication 7, caractérisé en ce que l'amide est choisi parmi l'érucamide, l'oléamide et le stéaramide.

10. Procédé selon la revendication 7, caractérisé en ce que le polyalkylènepolyol est le polyéthylène-glycol de masse moléculaire comprise entre 200 et 10 000.

11. Procédé selon la revendication 7, caractérisé en ce que le composé comportant au moins 2 fonctions époxyde est l'huile de soja époxydée.

**Claims**

1. A continuous process for the manufacture of ethylene homopolymers or copolymers of ethylene with at least one α-olefin having from 3 to 8 carbon atoms, successively comprising :

a) a first step for (co)polymerizing ethylene at a temperature between 180 and 320 °C, under a pressure between 300 and 2 500 bars, in the presence of a catalytic system comprising on the one hand at least one halogenated compound of a transition metal of groups IVa to VIa of the Periodic System and on the other hand at least one activator selected from hydrides and organo-metallic compounds of metals of groups I to III of the Periodic System, the molar ratio of the activator to the transition metal compound being between 1 and 10,

b) a second-step for separating the (co)polymer formed from the unreacted monomer(s), under a pressure of between 100 and 500 bars,

c) a third step for recycling the unreacted monomer(s), and

d) a fourth step for recompression up to the (co)polymerisation pressure,

characterized by introducing into the reaction mixture, at the end of the first step, at least one compound selected from monoketones having from 3 to 10 carbons atoms, diketones having from 4 to 11 carbon atoms, monoalcohols having from 1 to 14 carbons atoms, polyalcohols having from 2 to 10 carbon atoms, and water.

2. A process according to claim 1, characterized in that the molar flowrate of the said compound is between 0.5 and 6 times the molar flowrate of the transition metal or metals of the catalytic system.

3. A process according to either of claims 1 and 2, characterized in that the molar flowrate of the said compound is between 1 and 4 times the molar flowrate of the transition metal or metals of the catalytic system.

4. A process according to one of claims 1 to 3, characterized in that the monoketone is acetone.

5. A process according to one to claims 1 to 3, characterized in that the monoalcohol is selected from methanol, ethanol and isopropanol.

6. A process according to one of claims 1 to 3, characterized in that the polyalcohol is ethylene glycol.

7. A process according to one of claims 1 to 6, characterized by introducing, additionally, during the second and/or the third step, into the stream of recycled monomer(s) and, where applicable, of the (co)polymers formed, at least one compound selected from :

— amides of saturated or unsaturated organic acids having from 12 to 22 carbon atoms,

— polyalkylene polyols having from 4 to 500 carbon atoms,

— compounds containing at least two epoxide groups.

8. A process according to claim 7, characterized in that the amount of the said compound is between 0.001 and 0.1 mole per tonne of recycled monomer(s).

9. A process according to claim 7, characterized in that the amide is selected from erucamide, oleamide and stearamide.

10. A process according to claim 7, characterized in that the polyalkylene polyol is polyethylene glycol with a molecular weight between 200 and 10 000.

11. A process according to claim 7, characterized in that the compound containing at least two epoxide groups is epoxydized soyabean oil.

**Patentansprüche**

1. Verfahren zur kontinuierlichen Herstellung von Homopolymeren des Äthylens oder von Copolymeren des Äthylens mit mindestens einem α-Olefin mit 3 bis 8 Kohlenstoffatomen, welches Verfahren die aufeinanderfolgenden Schritte enthält :

a) eine erste Stufe zur (Co)polymerisation von Äthylen bei einer Temperatur zwischen 180° und 320 °C, unter einem Druck zwischen 300 und 2 500 bar, in Gegenwart eines Katalysatorsystems, das einerseits mindestens eine Halogenverbindung eines Übergangsmetalls der Gruppen IVa bis VIa des Periodensystems und anderseits mindestens einen Aktivator ausgewählt aus den Hydriden und den organometallischen Verbindungen der Metalle der Gruppen I bis III des Periodensystems enthält, wobei das Molverhältnis des Aktivators zur Übergangsmetallverbindung zwischen 1 und 10 beträgt,

b) eine zweite Stufe zur Trennung des gebildeten (Co)polymers von dem (den) nicht ausreagierten Monomer(en) unter einem Druck zwischen 100 und 500 bar,

c) eine dritte Stufe zur Rückführung des (der) nicht ausreagierten Monomer(s)(e), und

d) eine vierte Stufe zur neuerlichen Komprimierung auf den (Co)polymerisationsdruck,

dadurch gekennzeichnet, daß man am Ende der ersten Stufe in das Reaktionsmilieu mindestens eine Verbindung einführt, die ausgewählt ist aus der Gruppe bestehend aus den Monoketonen mit 3 bis 10 Kohlenstoffatomen, den Diketonen mit 4 bis 11 Kohlenstoffatomen, den Monoalkoholen mit 1 bis 14 Kohlenstoffatomen, den Polyalkoholen mit 2 bis 10 Kohlenstoffatomen und Wasser.

2. Verfahren nach Anspruch 1, dadurch gekennzeichnet, daß der molare Strom der genannten Verbindung zwischen dem 0,5- und 6-fachen molaren Strom des oder der Übergangsmetalle des Katalysatorsystems ausmacht.

3. Verfahren nach Anspruch 1 oder 2, dadurch gekennzeichnet, daß der molare Strom der genannten Verbindung zwischen dem 1- und 4-fachen molaren Strom des oder der Übergangsmetalle des Katalysatorsystems ausmacht.

4. Verfahren nach einem der Ansprüche 1 bis 3, dadurch gekennzeichnet, daß das Monoketon Aceton ist.

5. Verfahren nach einem der Ansprüche 1 bis 3, dadurch gekennzeichnet, daß der Monoalkohol ausgewählt ist aus der Gruppe bestehend aus Methanol, Äthanol und Isopropanol.

6. Verfahren nach einem der Ansprüche 1 bis 3, dadurch gekennzeichnet, daß der Polyalkohol Äthylenglycol ist.

7. Verfahren nach einem der Ansprüche 1 bis 6, dadurch gekennzeichnet, daß man weiters während der zweiten und/oder dritten Stufe in den Strom des (der) rückgeführten Monomer(s)(e) und gegebenenfalls der gebildeten (Co)polymere mindestens eine Verbindung einführt, die ausgewählt ist aus

— den Amiden gesättigter oder ungesättigter organischer Säuren, mit 12 bis 22 Kohlenstoffatomen,

— den Polyalkylenpolyolen mit 4 bis 500 Kohlenstoffatomen,

— den mindestens 2 Epoxidfunktionen besitzenden Verbindungen.

8. Verfahren nach Anspruch 7, dadurch gekennzeichnet, daß die Menge der genannten Verbindung zwischen 0,001 und 0,1 Mol/t rückgeführte(n)(r) Monomer(s)(e) beträgt.

9. Verfahren nach Anspruch 7, dadurch gekennzeichnet, daß das Amid ausgewählt ist aus den Amiden der Erucasäure, Ölsäure und Stearinsäure.

10. Verfahren nach Anspruch 7, dadurch gekennzeichnet, daß das Polyalkylenpolyol Polyäthylenglycol mit einer Molekularmasse zwischen 200 und 10 000 ist.

11. Verfahren nach Anspruch 7, dadurch gekennzeichnet, daß die mindestens 2 Epoxidfunktionen enthaltende Verbindung epoxidiertes Sojaöl ist.

FIGURE UNIQUE